# EUROPÄISCHE PATENTANMELDUNG

(11) **EP 4 354 699 A1**
(43) Veröffentlichungstag der Anmeldung: **17.04.2024**
(21) Anmeldenummer: 23201713.7
(22) Anmeldetag: 04.10.2023
(51) Int. Cl.: H02J 15/00, C25B 15/00, H01M 16/00, H02J 3/28, H01M 8/0656

(54) **DEZENTRALES ENERGIEVERSORGUNGSSYSTEM**

(30) Priorität: 04.10.2022 DE 202022105615 U
(71) Anmelder: Ben-Tec GmbH, 48431 Rheine (DE)
(72) Erfinder: Niehoff, Sebastian, 48432 Rheine (DE)
(74) Vertreter: Habbel, Ludwig

(57) **Zusammenfassung**

Bei einem dezentralen Energieversorgungssystem (1), welches die Kombination folgender Komponenten aufweist:
ein Elektrolyseur (8), eine Batterie (11), eine Brennstoffzelle (12),
ein Blockheizkraftwerk (14) und einen Wasserstoffspeicher (9), schlägt die Erfindung vor, dass das Energieversorgungssystem (1) ein Gleichspannungsnetz (6) aufweist, welches über einen AC/DC Wandler (5) an ein zentrales Stromnetz (2) angeschlossen ist und den Elektrolyseur (8), die Batterie (11) und die Brennstoffzelle (12) durch Gleichspannungsleitungen (7) wechselspannungsfrei miteinander verbindet.

## Beschreibung

Die Erfindung betrifft ein dezentrales Energieversorgungssystem nach dem Oberbegriff des Anspruchs 1.

Aus der Praxis ist ein solches Energieversorgungssystem bekannt. Die Energieversorger haben die Aufgabe, die aktuell benötigte Leistung in einem Netzabschnitt eines Strom- bzw. Spannungsnetzes zu jeder Zeit bereitzustellen, und elektrische Übertragungsnetze müssen für diese Leistungen ausgelegt sein. Durch die zunehmende Einspeisung von Erneuerbaren Energien ist die eingespeiste elektrische Leistung zunehmenden Schwankungen ausgesetzt. Während an sonnigen und windreichen Tagen die zur Verfügung stehende Leistung die Netzkapazitäten übersteigen kann und somit zu einer Abschaltung der Erzeugeranlagen führt, kann während einer sogenannten "Dunkelflaute" die benötigte Leistung von den Erneuerbaren Energien nicht lokal zur Verfügung gestellt werden, so dass die Energieversorger Energie zukaufen müssen.

Angesichts der zunehmenden Schwankungen im Angebot elektrischer Energie und der damit einhergehenden Belastung der Stromnetze sind die Stromnetze derzeit unterdimensioniert. Um das Abschalten der Erneuerbaren Energien aufgrund der Überlastung der Netzkapazitäten zu vermeiden oder um einem Anstieg der Nachfrage nach elektrischer Energie entgegenzuwirken, ist es langfristig notwendig, die Stromnetze auszubauen.

Das gattungsgemäße Energieversorgungssystem kann die Netzauslastung erhöhen und schwache Netzknotenpunkte stabilisieren, indem es die Kombination folgender Komponenten aufweist:
- einen Elektrolyseur, der elektrische Energie aufnimmt und Wasserstoff erzeugt,
- eine Batterie, die elektrische Energie aufnimmt und zeitversetzt abgeben kann,
- eine Brennstoffzelle, die Wasserstoff aufnimmt und daraus elektrische Energie erzeugt,
- ein Blockheizkraftwerk, das mit einem Brenngas - insbesondere Wasserstoff enthaltend - betrieben werden kann und sowohl elektrische als auch Wärme-Energie abgibt,
- und einen Wasserstoffspeicher, die Wasserstoff aufnimmt und zeitversetzt abgeben kann.

Durch diese Kombination kann mittels des Energieversorgungssystems ein teurer Ausbau der Stromnetze vermieden werden. Strom kann bei einem Überangebot im Netz günstig eingekauft und die Energie entweder direkt in elektrischer Form in der Batterie oder umgewandelt in Form von Wasserstoff gespeichert werden. Die gespeicherte Energie kann später bei Lastspitzen wieder an das Netz abgegeben und somit der Zukauf von Energie, der im Falle von bei Lastspitzen üblicherweise besonders teuer ist, kann vermieden werden.

Der Erfindung liegt die Aufgabe zugrunde, ein gattungsgemäßes Energieversorgungssystem dahingehend zu verbessern, dass dieses die Entlastung eines Stromnetzes verlustarm ermöglicht.

Diese Aufgabe wird durch die Kombination mehrerer Komponenten verwirklicht. Dabei ist vorteilhaft, dass die Komponenten jeweils gebräuchlich sind und somit handelsüblich wirtschaftlich bereitgestellt werden können. Das erfindungsgemäße Energieversorgungssystem besteht aus einem AC/DC Wandler, welcher im Netz vorhandene Wechselspannung in Gleichspannung umwandelt. Diese Gleichspannung liegt nun unter anderem am Elektrolyseur an, welcher daraus Wasserstoff erzeugen kann. Der Wasserstoff wird in dem Wasserstoffspeicher gespeichert und kann bei Bedarf über eine Brennstoffzelle wieder in Gleichstrom umgewandelt werden. Dieser Gleichstrom kann nun in das Netz abgeben werden oder in einer Batterie gespeichert werden.

Durch die Verwendung eines Gleichstomnetzes wird hierbei die Effizienz gesteigert sowie der Materialienverbauch gesenkt, so dass das erfindungsgemäße Energieversorgungssystem besonders verlustarm und somit effizient arbeitet, da Umwandlungsverluste vermieden werden, wie sie ansonsten bei der mehrfachen Umwandlung zwischen Gleich- und Wechselstrom auftreten.

Die Batterie wird dazu verwendet, ein kurzzeitiges Leistungsüberangebot im Netz aufzunehmen und im Bedarfsfall die gespeicherte Energie schnell wieder abzugeben. Zusätzlich ist an den Wasserstoffspeicher ein Blockheizkraftwerk angeschlossen, welches bei Bedarf den Wasserstoff in Wechselstrom wandeln kann.

Das System aus Blockheizkraftwerk, Batterie und Brennstoffzelle ist eine Kombination verschieden träger Energiewandler, welche auf unterschiedliche Lastprofile flexibel reagieren können. Durch die Kombination von Brennstoffzelle, Batterie sowie einem mit Wasserstoff betriebenen BHKW kann die Netzauslastung erhöht werden und schwache Netzknotenpunkte können stabilisiert wenden. Zugleich kann der Ausbau der notwendigen regenativen Energie, sowie die E-Mobilität durch dezentrale Erhöhung der Kapazitäten erhöht werden, ohne dass die ansonsten unzureichende Dimensionierung des Stromnetzes dies verhindern würde.

Eine Besonderheit des erfindungsgemäßen Energieversorgungssystems liegt darin, dass dezentral der netzseitige Primär- und Sekundärregler bereitgestellt werden kann, mit dem Vorteil einer zentralen Energiespeicherung in Form von Wasserstoff.

Ein Ausführungsbeispiel eines erfindungsgemäßen Energieversorgungssystems wird anhand der rein schematischen Darstellung nachfolgend näher erläutert.

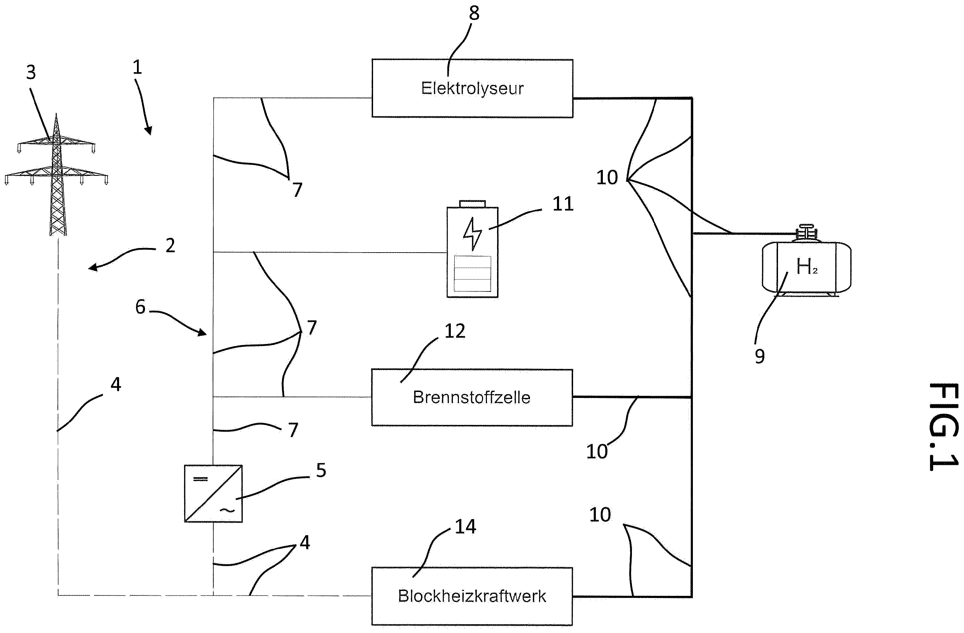

Dabei ist in der Zeichnung insgesamt ein Energieversorgungssystem 1 dargestellt, welches ein zentrales Stromnetz 2 aufweist, das durch einen Strommasten 3 und eine gestrichelt angedeutete Wechselspannungsleitung 4 symbolisiert ist. Die Wechselspannungsleitung 4 führt zu einem AC/DC Wandler 5, der auf seiner Gleichspannungsseite an ein Gleichstromnetz 6 angeschlossen ist, wobei Gleichspannungsleitungen 7 die an dieses Gleichstromnetz 6 angeschlossenen Komponenten miteinander verbinden und in durchgezogene Linien dargestellt sind.

Die vom Stromnetz 2 stammende und nun gleichgerichtete elektrische Energie kann mittels des Gleichstromnetzes 6 zum Betreiben eines Elektrolyseurs 8 genutzt werden. Das dabei erzeugte Wasserstoffgas kann in einem Wasserstoffspeicher 9 zur späteren Verwendung zwischengespeichert werden, wobei Wasserstoffleitungen 10 des Energieversorgungssystems 1 in größerer Strichstärke als die elektrischen Leitungen dargestellt sind.

Alternativ dazu, die vom Stromnetz 2 stammende elektrische Energie für den Betrieb des Elektrolyseurs 7 zu nutzen, kann die Energie unmittelbar als elektrische Energie in eine Batterie 11 eingespeichert werden, so dass sie schnell verfügbar ist, um später bei Bedarf abgerufen zu werden. Diese kurzfristig verfügbare, zunächst als Gleichstrom vorliegende elektrische Energie kann mittels des AC/DC Wandlers 5 in Form von Wechselspannung in das zentrale Stromnetz 2 eingespeist werden.

Der im Wasserstoffspeicher 9 gespeicherte Wasserstoff kann über die Wasserstoffleitungen 10 einer Brennstoffzelle 12 zugeführt werden, so dass mittels der Brennstoffzelle 12 elektrische Energie in Form von Gleichstrom erzeugt werden kann und über die Gleichstromleitungen 7 zum AC/DC Wandler 5 geleitet werden kann, so dass letztlich diese elektrische Energie als Wechselstrom über die Wechselspannungsleitungen 4 in das zentrale Stromnetz 2 eingespeist werden kann.

Der im Wasserstoffspeicher 9 gespeicherte Wasserstoff kann über die Wasserstoffleitungen 10 jedoch auch wahlweise zu einem BHKW 14 geführt werden und dort als Brenngas genutzt werden, um sowohl Wärme zu erzeugen als auch elektrische Energie in Form von Wechselstrom. Dieser Wechselstrom kann unmittelbar, ohne eine Umrichtung mittels des AC/DC Wandlers 5, über die Wechselspannungsleitungen 4 in das zentrale Stromnetz 2 eingespeist werden.

### Bezugszeichen:

- 1: Energieversorgungssystem
- 2: Zentrales Stromnetz
- 3: Strommast
- 4: Wechselspannungsleitung
- 5: AC/DC Wandler
- 6: Gleichspannungsnetz
- 7: Gleichspannungsleitung
- 8: Elektrolyseur
- 9: Wasserstoffspeicher
- 10: Wasserstoffleitung
- 11: Batterie
- 12: Brennstoffzelle
- 14: Blockheizkraftwerk

## Patentansprüche

1. Dezentrales Energieversorgungssystem (1), welches die Kombination folgender Komponenten aufweist:
ein Elektrolyseur (8),
eine Batterie (11),
eine Brennstoffzelle (12),
ein Blockheizkraftwerk (14)
und einen Wasserstoffspeicher (9),
**dadurch gekennzeichnet,**
**dass** das Energieversorgungssystem (1) ein Gleichspannungsnetz (6) aufweist, welches über einen AC/DC Wandler (5) an ein zentrales Stromnetz (2) angeschlossen ist und den Elektrolyseur (8), die Batterie (11) und die Brennstoffzelle (12) durch Gleichspannungsleitungen (7) wechselspannungsfrei miteinander verbindet.

2. Energieversorgungssystem (1) nach Anspruch 1,
**dadurch gekennzeichnet,**
**dass** das Blockheizkraftwerk (14) einerseits an den Wasserstoffspeicher (9) und andererseits über eine Wechselspannungsleitung (4) an das zentrale Stromnetz (2) angeschlossen ist.
